# EUROPEAN PATENT APPLICATION

(11) **EP 3 231 570 A1**
(43) Date of publication of application: **18.10.2017**
(21) Application number: 15866798.0
(22) Date of filing: 09.11.2015
(51) Int. Cl.: B29C 39/26, B29C 39/10, B29C 45/14, B29C 45/26, G03G 15/00, G03G 15/20

(54) **DIE FOR MOLDING ROLLER**

(30) Priority: 09.12.2014 JP 2014248971
(71) Applicant: NOK Corporation, Tokyo 105-8585 (JP)
(72) Inventor: YASUNAGA Shiro, Fujisawa-shi Kanagawa 251-0042 (JP); WATANABE Shigeru, Fujisawa-shi Kanagawa 251-0042 (JP); SUZUKI Yuta, Fujisawa-shi Kanagawa 251-0042 (JP)
(74) Representative: TBK
(86) International application number: PCT/JP2015/081427
(87) International publication number: WO 2016/092998

(57) **Abstract**

The invention relates to molding of a roller in which a roller body is provided integrally on the outer periphery of an axial core member (310), and the objective of the invention is to prevent the generation of a thin burr, and damage to the die, for example. In order to achieve this objective, a die is provided with a first split die (1) and a second split die (2) which can butt against one another or separate from one another at mutually-opposing parting surfaces (1a and 2a). In the first split die (1) and the second split die (2) are formed: supporting portions (11 and 21) which are capable of supporting the axial core member (310) of the roller, and which can be brought into intimate contact with the outer peripheral surface of the axial core member (310), with a moderate surface pressure, when the mold is clamped; a roller body molding surface (12), a cavity (A) being defined between the axial core member (310) and the roller body molding surface (12) when the mold is clamped; and recessed portions (14 and 24) which are located at both end portions of the supporting portions (11 and 21) and extend along the parting surfaces (1a and 2a), and which are not in contact with the outer peripheral surface of the axial core member (310) when the mold is clamped, and which penetrate through the supporting portions (11 and 21).

## Description

### BACKGROUND OF THE INVENTION

### Field of the Invention

The present invention relates to a die for molding a roller used, for example, as an image forming roller, a pressurizing roller, or the like for a printer, a copying machine, or the like, with a structure in which a roller body made of a rubber-like elastic material (rubber material or synthetic resin material with rubber-like elasticity) is integrally molded on the outer periphery of an axial core member.

### Description of the Conventional Art

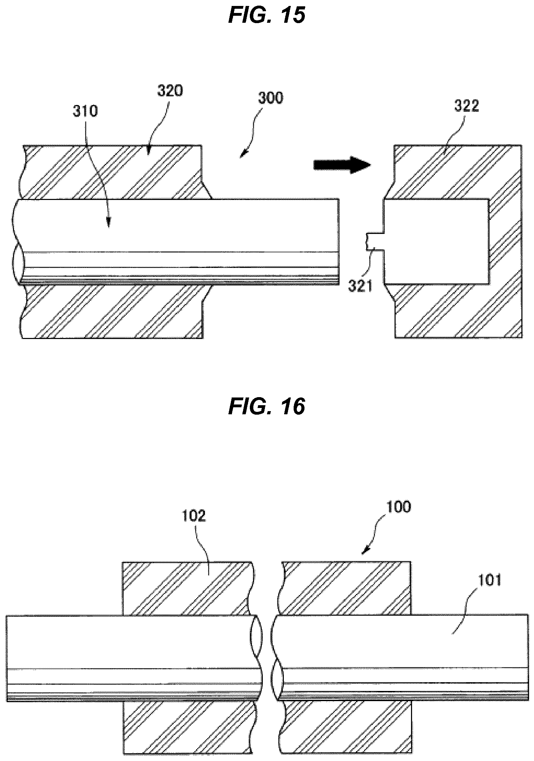

As illustrated in FIG. 16, a roller 100 used as an image forming roller or a pressurizing roller for a copying machine and the like, includes a structure in which a roller body 102 made of a rubber-like elastic material is integrally molded on the outer periphery of a metal axial core member 101 serving as a rotating shaft.

A manufacturing method is known (for example, refer to Patent Literature 1 or Patent Literature 2 described below) in which such a roller 100 is manufactured, as illustrated in FIG. 17, by manufacturing the axial core member 101, positioning and fixing the axial core member 101 between a first split mold 201 and a second split mold 202 of a die 200 including the first split mold 201 and the second split mold 202 that can be contacted with and separated from each other, injecting uncrosslinked liquid rubber composition into a cylindrical cavity 203 defined between the axial core member 101 and roller molding surfaces 201a, 202a of the first split mold 201 and the second split mold 202 by mold clamping, and causing the liquid rubber composition to crosslink and cure, thereby integrating the rubber composition with the axial core member 101.

### PRIOR ART DOCUMENT

### Patent Document

Patent Literature 1: Japanese Unexamined Patent Application Publication No. 1-135608A
Patent Literature 2: Japanese Unexamined Patent Application Publication No. 2002-36247A

### SUMMARY OF THE INVENTION

### Problem to be Solved by the Invention

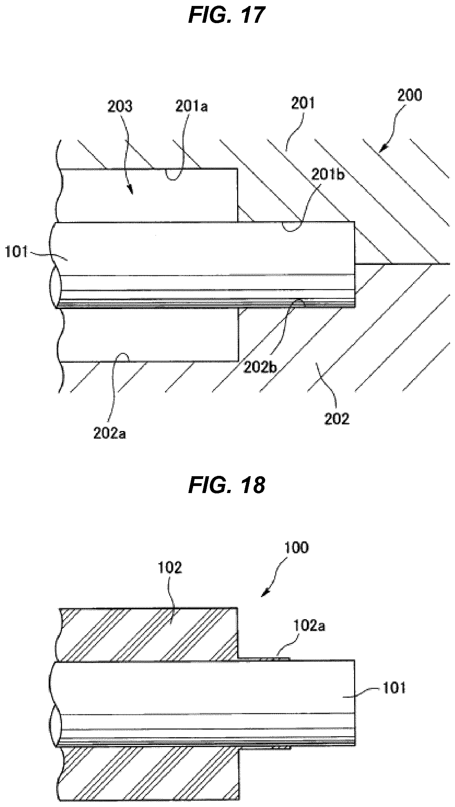

However, in the die 200 illustrated in FIG. 17, in a mold clamped state, a gap extending from the cavity 203 is present between supporting portions 201b, 202b respectively formed to the first split mold 201 and the second split mold 202, and an outer circumferential surface of the end portion of the axial core member 101 supported by the supporting portions 201b, 202b. This causes a thin burr 102a to be formed extending from an inner diameter part of the roller body 102 on the outer circumferential surface of the axial core member 101 of the molded roller 100, as illustrated in FIG. 18. A trouble to a device may be caused if the thin burr 102a drops off from the outer circumferential surface of the axial core member 101 inside the device in which the roller 100 is incorporated. Hence, to prevent such a trouble, a step to deburr the thin burr 102a is necessary after the molding described above.

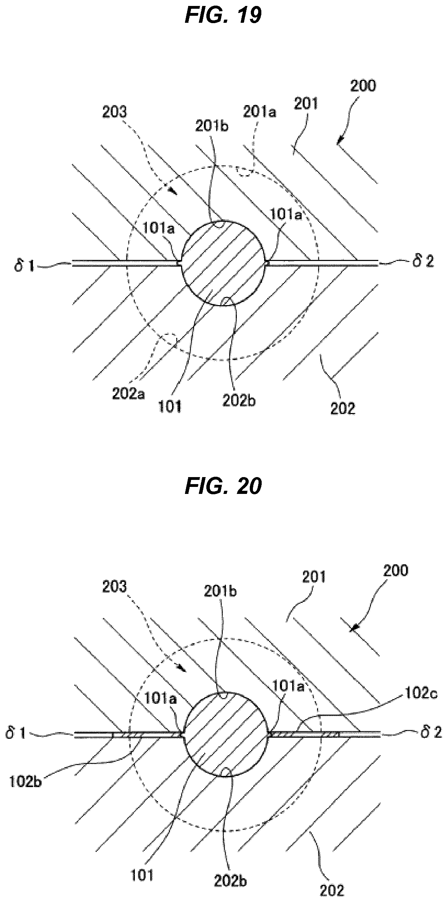

If the outer circumferential surface of the end portion of the axial core member 101 is brought into press-contact with the supporting portions 201b, 202b in order to prevent such thin burrs 102a from being generated, as illustrated in FIG. 19, the axial core member 101 is deformed by the mold clamping load between the first split mold 201 and the second split mold 202, and bitten between the parting surfaces of the first split mold 201 and the second split mold 202, which forms protrusions 101a, 101a. This obstructs the die 200 from being tightened and easily creates the gaps δ1, δ2 between the parting surfaces. For this reason, as illustrated in FIG. 20, thin plate burrs 102b, 102c extending along the gaps δ1, δ2 from the outer circumferential surface of the axial core member 101 and the outer circumferential surface of the roller body 102 are formed. As a result, not only a deburring step is still necessary, but also the die 200 may be damaged by repeatedly biting the axial core member 101.

The present invention has been made in view of the above points, and an object of the present invention is to prevent thin burrs from being generated and a die from being damaged, in molding a roller including a roller body integrally provided on the outer periphery of an axial core member.

### Means for Solving the Problem

As means for effectively solving the technical problem mentioned above, a die for molding a roller according to the invention defined in claim 1 includes a first split mold and a second split mold which are capable of contacting and separating on parting surfaces opposed to each other, and the first split mold and the second split mold are formed with: support portions capable of supporting an axial core member of the roller and closely contacting an outer circumferential surface of the axial core member at an appropriate surface pressure at the time of mold clamping; roller body molding surfaces that define a cavity between the axial core member and the roller body molding surfaces at the time of mold clamping; and recesses located at both end portions of each of the support portions and extending along the parting surfaces, not in contact with the outer circumferential surface of the axial core member at the time of mold clamping, and penetrating the supporting portions.

In the above configuration, when the axial core member of the roller is positioned and disposed between the first split mold and the second split mold and mold clamped, the axial core member is supported in a close contact state between the support portions, and a cavity is defined between the axial core member and the roller body molding surfaces. At this time, a portion of the axial core member supported between the support portions of the first split mold and the second split mold is subject to compressive force due to mold clamping. However, since recesses are formed at both end portions of the support portions, the recesses extending along the parting surfaces of the first split mold and the second split mold, and are not in contact with the outer circumferential surface of the axial core member at the time of mold clamping, the outer circumferential surface of the axial core member is prevented from being bitten between the end portions of the support portions, so that the first split mold and the second split mold are not obstructed from being closed. Therefore, the parting surfaces of the first split mold and the second split mold are brought into close contact with each other. In the step of injecting the uncrosslinked liquid rubber composition into the cavity and crosslinking and curing the liquid rubber composition to integrally mold the roller body on the axial core member, since the support portions of the first split mold and the second split mold and the outer circumferential surface of the axial core member are in close contact with each other, the liquid rubber composition is prevented from permeating therebetween and forming the thin burr, and the liquid rubber composition is also prevented from permeating between the parting surfaces and forming the thin burr.

The die for molding the roller according to the invention defined in claim 2 is that, in the configuration described in claim 1, the first split mold and the second split mold are formed with tear-off portion molding surfaces located on the opposite side to the roller body molding surfaces interposing the support portions and that define a tear-off portion molding space between the axial core member and the tear-off portion molding surfaces at the time of mold clamping.

In the above configuration, in the step of integrally molding the roller body on the axial core member, the uncrosslinked liquid rubber composition injected into the cavity defined between the axial core member and the roller body molding surfaces by mold clamping flows between the tear-off portion molding space defined between the axial core member and the tear-off portion molding surfaces and the cavity, through the recesses formed to the support portions therebetween as the gate. Hence, gate burrs continuous with the roller body are formed in the gate and the tear-off portion is formed in the tear-off portion molding space by curing the liquid rubber composition. This allows the gate burrs to be torn off together with the tear-off portion after the die is opened.

The die for molding the roller according to the invention defined in claim 3 is that, in the configuration described in claim 1 or 2, the axial core member is formed with an annular projection, and an outer circumferential surface of the annular projection is in close contact with the support portions in a state appropriately compressed in a radial direction.

In the above-described configuration, the outer circumferential surface of the axial core member is made to closely contact the support portions of the first split mold and the second split mold in a state in which the annular projection is appropriately compressed in the radial direction, thereby enabling the close contact surface pressure to be heightened and permeation of the liquid rubber composition to be favorably sealed, and the load of the first split mold and the second split mold due to mold clamping to be reduced by compressive deformation of the annular projection.

The die for molding the roller according to the invention defined in claim 4 is that, in the configuration described in claim 1 or 2, each of the support portions is formed with an arc shape projection.

In the above-described configuration, since the support portions formed in the first split mold and the second split mold are formed by arc shape projections, the range of contact with the axial core member is limited with respect to the axial direction, thereby enabling the close contact surface pressure to the axial core member to be heightened and permeation of the liquid rubber composition to be favorably sealed.

### Effect of the Invention

According to the die for molding of the roller of the present invention, in molding a roller including a roller body integrally provided on the outer periphery of an axial core member, the outer circumferential surface of the axial core member is prevented from being bitten between the parting surfaces of the first split mold and the second split mold at the time of mold clamping, a thin burr is prevented from being formed between the outer circumferential surface of the axial core member and the support portions of the first split mold and the second split mold, and between the parting surfaces, and damage to the first split mold and the second split mold due to biting or the like can be effectively prevented.

### BRIEF EXPLANATION OF THE DRAWINGS

FIG. 1 is a partial cross-sectional view illustrating a roller molded in a first embodiment of a die for molding a roller according to the present invention by cutting the roller at a plane passing through the axial center of the roller.
FIG. 2 is a partial cross-sectional view in a separated state, illustrating the first embodiment of the die for molding the roller according to the present invention by cutting the roller at a plane passing through the axial center of a cavity.
FIG. 3 is a partial cross-sectional view in the separated state, illustrating the first embodiment of the die for molding the roller according to the present invention by cutting the roller at a plane passing through line III-III in FIG. 2 and orthogonal to the axial center of the cavity.
FIG. 4 is a partial cross-sectional view in a mold clamped state, illustrating the first embodiment of the die for molding the roller according to the present invention by cutting the roller at a plane passing through the axial center of the cavity.
FIG. 5 is a partial cross-sectional view in the mold clamped state, illustrating the first embodiment of the die for molding the roller according to the present invention by cutting the roller at a plane passing through line V-V in FIG. 4 and orthogonal to the axial center of the cavity.
FIG. 6 is a partial cross-sectional view illustrating a molded article in the first embodiment of the die for molding the roller according to the present invention by cutting the molded article at a plane passing through the axial center of the molded article.
FIG. 7 is a cross-sectional view illustrating the molded article in the first embodiment of the die for molding the roller according to the present invention by cutting the molded article at a plane passing through line VII-VII in FIG. 6 and orthogonal to the axial center of the molded article.
FIG. 8 is an explanatory view illustrating a step of removing burrs from the molded article in the first embodiment of the die for molding the roller according to the present invention.
FIG. 9 is a partial cross-sectional view in a separated state, illustrating a second embodiment of a die for molding a roller according to the present invention by cutting the roller at a plane passing through the axial center of a cavity.
FIG. 10 is a partial cross-sectional view in the separated state, illustrating the second embodiment of the die for molding the roller according to the present invention by cutting the roller at a plane passing through line X-X in FIG. 9 and orthogonal to the axial center of the cavity.
FIG. 11 is a partial cross-sectional view in a mold clamped state, illustrating the second embodiment of the die for molding the roller according to the present invention by cutting the roller at a plane passing through the axial center of the cavity.
FIG. 12 is a partial cross-sectional view in the mold clamped state, illustrating the second embodiment of the die for molding the roller according to the present invention by cutting the roller at a plane passing through line XII-XII in FIG. 11 and orthogonal to the axial center of the cavity.
FIG. 13 is a partial cross-sectional view illustrating a molded article in the second embodiment of the die for molding the roller according to the present invention by cutting the molded article at a plane passing through the axial center of the molded article.
FIG. 14 is a cross-sectional view illustrating the molded article in the second embodiment of the die for molding the roller according to the present invention by cutting the molded article at a plane passing through line XIV-XIV in FIG. 13 and orthogonal to the axial center of the molded article.
FIG. 15 is an explanatory view illustrating a step of removing burrs from the molded article in the second embodiment of the die for molding the roller according to the present invention.
FIG. 16 is a partial cross-sectional view illustrating the roller having a structure in which the roller body made of a rubber-like elastic material is integrally molded on the outer periphery of the axial core member, by cutting the roller at a plane passing through the axial center of the roller.
FIG. 17 is a partial cross-sectional view in a mold clamped state, illustrating an example of a die for molding a roller in a conventional technique, by cutting the die at a plane passing through the axial center of a cavity.
FIG. 18 is a partial cross-sectional view illustrating a molded article formed by the die for molding the roller in a conventional technique by cutting the molded article at a plane passing through the axial center of the molded article.
FIG. 19 is a partial cross-sectional view illustrating a state in which a gap is created between parting surfaces in a conventional technique, by cutting at a plane orthogonal to the axial center.
FIG. 20 is a partial cross-sectional view illustrating a state in which a thin burr is created due to the gap created between the parting surfaces in a conventional technique, by cutting at a plane orthogonal to the axial center.

### DETAILED DESCRIPTION OF PREFERRED EMBODIMENTS

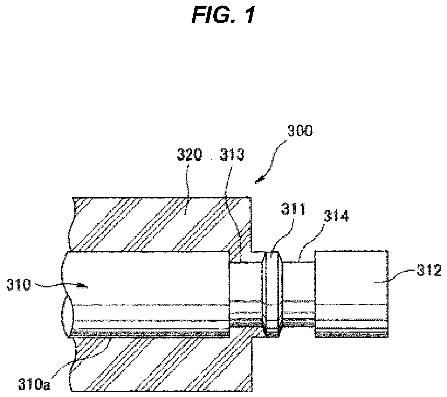

Preferred embodiments of a die for molding a roller according to the present invention will be described hereinafter with reference to the drawings. Firstly, FIGS.1 to 8 illustrate a first embodiment.

FIG. 1 illustrates a roller 300 which is molded using a die according to the first embodiment and is used as an image forming roller, a pressurizing roller, or the like in a printer, a copying machine, or the like, for example. The roller 300 has a structure in which a roller body 320 made of a rubber-like elastic material is integrally molded on the outer periphery of a metal axial core member 310 serving as a rotating shaft. An annular projection 311 located at one end in the axial direction of the roller body 320 is formed on an outer circumferential surface 310a of the axial core member 310.

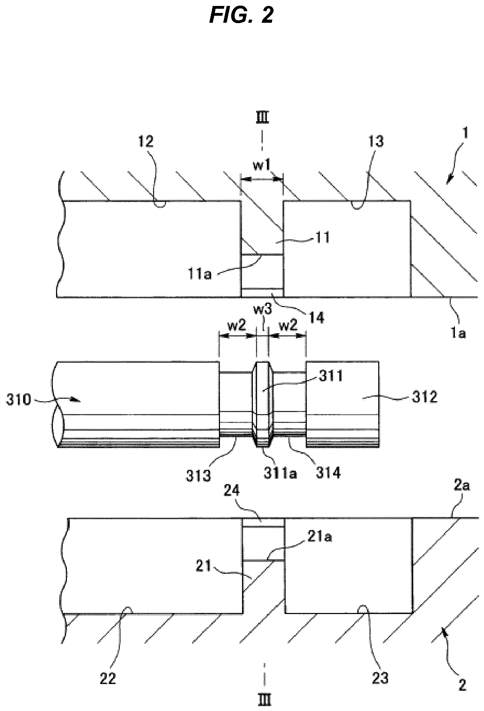

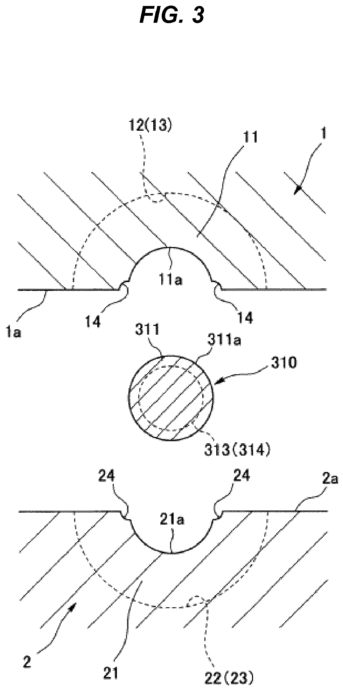

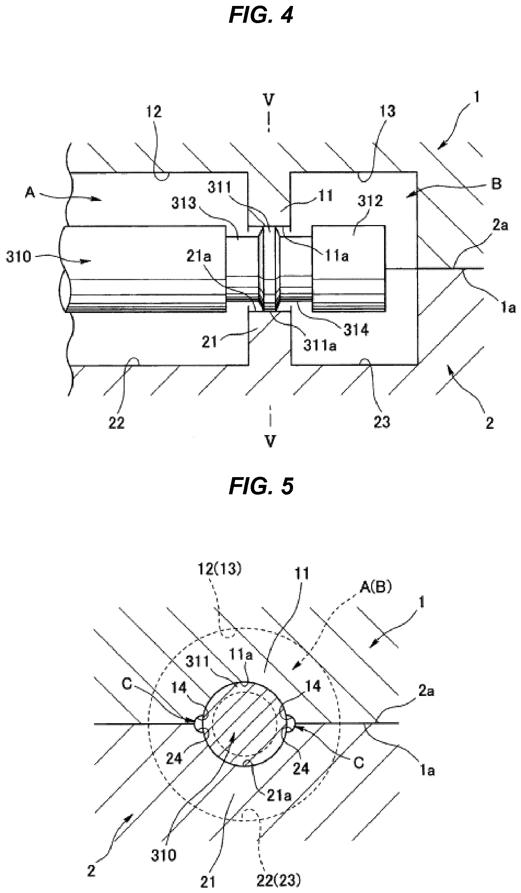

As illustrated in FIGS. 2 and 3, the die according to the first embodiment for molding the above-described roller 300 includes a first split mold 1 and a second split mold 2 capable of contacting and separating on parting surfaces 1a, 2a opposed to each other. The parting surfaces 1a, 2a of the first split mold 1 and the second split mold 2 are provided with: support portions 11, 21 including arc shape protrusions and capable of closely contacting an outer circumferential surface 311 a of the annular projection 311 of the axial core member 310, at an appropriate surface pressure, in other words, with a proper interference at the time of mold clamping illustrated in FIGS. 4 and 5; roller body molding surfaces 12, 22 which define a cylindrical cavity A between the axial core member 310 and the roller body molding surfaces at the time of mold clamping; and tear-off portion molding surfaces 13, 23 located on the opposite side in the axial direction to the roller body molding surfaces 12, 22 interposing the support portions 11, 21 and defining a tear-off portion molding space B between the one axial end 312 of the axial member 310 and the tear-off portion molding surfaces at the time of mold clamping, respectively.

At both ends of each of the support portions 11, 21, recesses 14, 24 are respectively formed, the recesses extending through the support portions 11, 21 in the axial direction along the parting surfaces 1a, 2a, respectively, being not in contact with the outer circumferential surface 311a of the annular projection 311 of the axial core member 310 at the time of mold clamping, and defining semicircular gates C as illustrated in FIG. 5 with the outer circumferential surface 311a of the annular projection 311.

Annular grooves 313, 314 are provided on both sides of the annular projection 311 in the axial core member 310 in the axial direction, in other words, the annular projection 311 is formed as a relative protrusion between the annular grooves 313, 314. In addition, the annular projection 311 becomes narrower in width in the axial direction toward the outer diameter side so that the annular projection 311 is easily compressed and deformed when tightened between the support portions 11, 21 of the first split mold 1 and the second split mold 2, and in width w1 in the axial direction support portions 11, 21 and in width w2 in the axial direction of the annular grooves 313, 314 are larger than in width w3 in the axial direction of the outer circumferential surface 311a of the annular projection 311.

In order to form the roller 300 of FIG. 1 by using the die according to the first embodiment including the configuration as described above, firstly, as illustrated in FIGS. 2 and 3, the axial core member 310 is inserted between the first split mold 1 and the second split mold 2 separated from each other, and is positioned such that one axial end 312 thereof is located between the tear-off portion molding surfaces 13, 23 and the annular projection 311 is located between the support portions 11, 21. Then, the axial core member 310 is placed on the support portion 21 of the second split mold 2 to be mold lamped. The mold clamping, as illustrated in FIGS. 4 and 5, brings the inner circumferential surfaces 11a, 21a of the support portions 11, 21 into close contact with the outer circumferential surface 311 a of the annular projection 311 at an appropriate surface pressure, such that the axial core member 310 is supported and fixed between the first split mold 1 and the second split mold 2 and the cylindrical cavity A is defined between the outer circumferential surface of the axial core member 310 and the roller body molding surfaces 12, 22, and a tear-off portion molding space B is defined between one axial end 312 in the axial direction of the axial core member 310 and the tear-off portion molding surfaces 13, 23.

At this time, end surfaces of the support portions 11, 21 on the cavity A side are located over the outer periphery of the annular grooves 313, 314, and end surfaces of the support portions 11, 21 on the tear-off portion molding space B side are located over the outer periphery of the annular grooves 313, 314.

The annular projection 311 of the axial core member 310 is subject to compressive deformation due to mold clamping between the support portion 11 of the first split mold 1 and the support portion 21 of the second split mold 2. However, since recesses 14, 24 are formed at both end portions of the support portions 11, 21, the recesses extending along the parting surfaces 1a, 2a, and being not in contact with the outer circumferential surface 311a of the annular projection 311 of the axial core member 310 at the time of mold clamping, the outer circumferential surface 311a of the annular projection 311 is prevented from being bitten between the end portions of the support portions 11, 21 (between the parting surfaces 1a, 2a). The first split mold 1 and the second split mold 2 are therefore not obstructed from being closed, and the parting surfaces 1a, 2a are brought into close contact with each other.

Further, since the axial width of the annular projection 311 becomes narrower toward the outer diameter side, deformation due to mold clamping mainly occurs on the annular projection 311 side, and damage to the support portions 11, 21 (the first split mold 1 and the second split mold 2) is suppressed. In addition, since in width w1 in the axial direction of the support portions 11, 21 and in width w2 in the axial direction of the annular grooves 313, 314 are larger than in width w3 in the axial direction of the outer circumferential surface 311a of the annular projection 311, slight misalignment is allowable in placing the axial core member 310 between the first split mold 1 and the second split mold 2.

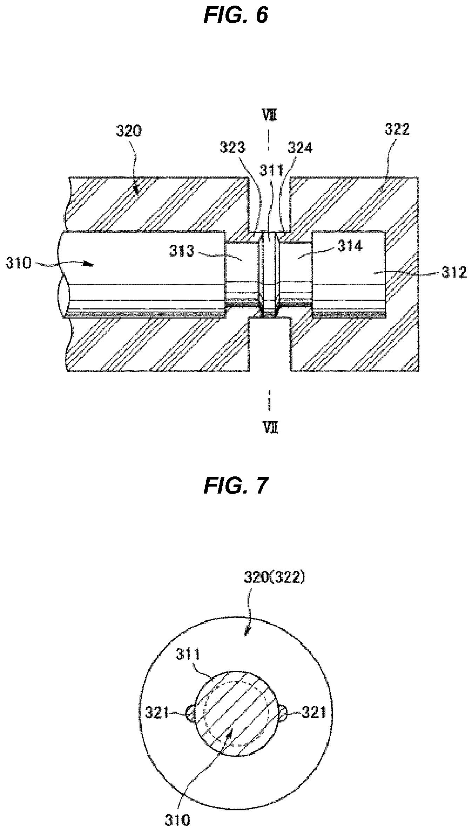

Next, for example, an uncrosslinked liquid rubber composition is injected into the die through an injection port (not illustrated) opened in the tear-off portion molding space B. The liquid rubber composition passes from the tear-off portion molding space B through the semicircular shaped gates C defined between the recesses 14, 24 formed at both end portions of the support portions 11, 21 and the outer circumferential surface 311 a of the annular projection 311, and fills inside the cavity A to be shaped. Then, the liquid rubber composition in the cavity A is crosslinked and cured, so that the roller body 320 integrated with the axial core member 310 is molded as illustrated in FIGS. 6 and 7. The liquid rubber composition in the gates C is crosslinked and cured, so that gate burrs 321 continuous with the roller body 320 are molded as illustrated in FIG. 7. The liquid rubber composition in the tear-off portion molding space B is also crosslinked and cured, so that a tear-off portion 322 continuous with the gate burrs 321 is molded as illustrated in FIGS. 6 and 7. In addition, the liquid rubber composition is crosslinked and cured between the annular grooves 313, 314 and the support portions 11, 21, so that annular rims 323, 324 illustrated in FIG. 6 are molded.

At this time, as illustrated in FIGS. 4 and 5 described above, since the outer circumferential surface 311a of the annular projection 311 and the inner circumferential surfaces 11a, 21a of the support portions 11, 21 are in close contact with each other at an appropriate surface pressure by mold clamping, the liquid rubber composition is prevented from permeating therebetween and from forming a thin burr. Since the parting surfaces 1a and 2a are also in close contact with each other, the liquid rubber composition is prevented from permeating therebetween and from forming a thin burr.

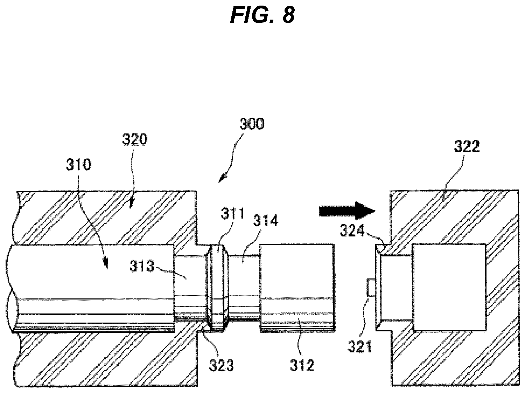

Then, after opening the die by separating the first split mold 1 and the second split mold 2 from each other and taking out the molded article illustrated in FIGS. 6 and 7, the tear-off portion 322 is torn off by hand or the like, as illustrated in FIG. 8. The annular rim 324 and the gate burrs 321 which are continuous with the tear-off portion 322 are also torn off with the tear-off portion 322, enabling deburring to be performed easily, and the roller 300 as a product is obtained.

Although the annular rim 323 which is continuous with the roller body 320 remains even after the deburring, the annular rim 323 is formed relatively thick with the annular groove 313 of the axial core member 310, and is not a thin burr. Therefore, when the roller 300 is used as an image forming roller, a pressurizing roller, or the like in a copying machine or the like, the annular rim 323 will not fall off from the axial core member 310 and will not be a foreign object. Thus, the annular rim 323 may be made less liable to fall off by making the annular groove 313 deeper to thereby make the annular rim 323 thicker.

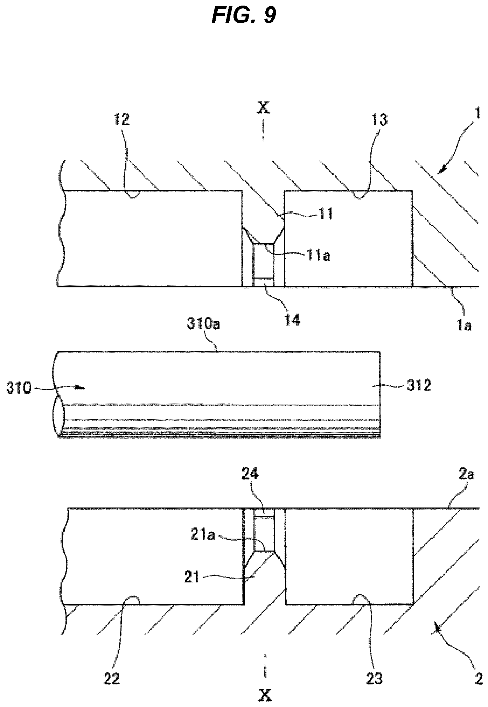

Next, FIGS. 9 to 15 illustrate a second embodiment of a die for molding a roller according to the present invention.

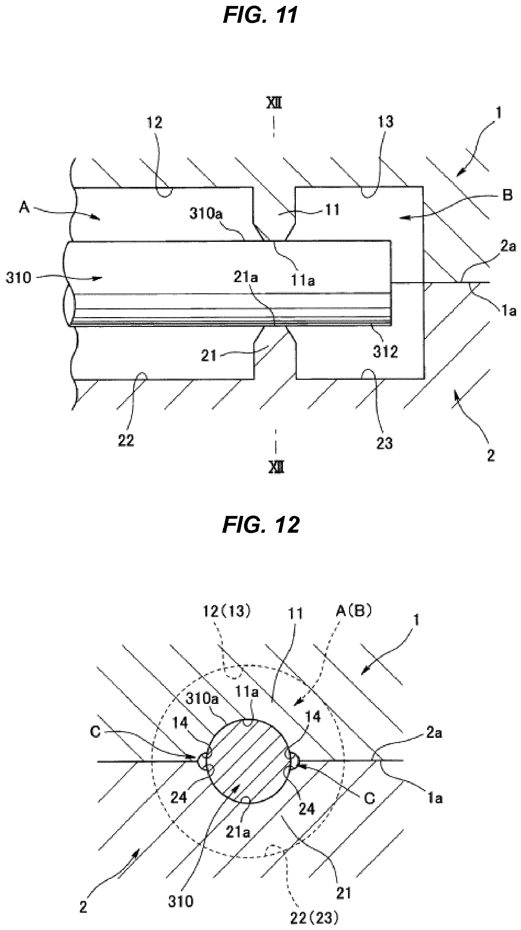

The second embodiment is different from the above-described first embodiment in that an axial core member 310 has a simple cylindrical shape and support portions 11, 21 of a first split mold 1 and a second split mold 2 has a shape in which in width w1 in the axial direction decreases toward the inner diameter side in the vicinity of the inner diameter portion of the molds. Recesses 14, 24 extending axially through the support portions 11, 21 along parting surfaces 1a, 2a at both end portions of the respective support portions 11, 21 are not in contact with outer circumferential surface 310a of the axial core member 310 at the time of mold clamping, and defines semicircular gates C as illustrated in FIG. 12 with the outer circumferential surface 310a of the axial core member 310. The other parts can basically be configured similarly to the first embodiment.

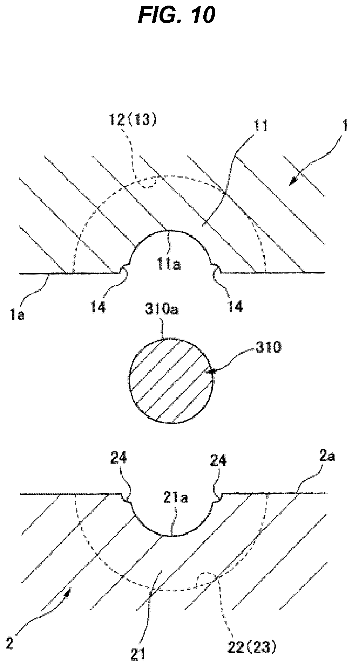

Molding by using the die according to the second embodiment including the configuration as described above is basically similar to the case according to the first embodiment. Specifically, first, as illustrated in FIGS. 9 and 10, the axial core member 310 is inserted between the first split mold 1 and the second split mold 2 separated from each other, and is positioned such that one axial end 312 of the axial core member is located between the tear-off portion molding surfaces 13, 23. Then, the axial core member 310 is placed on the support portion 21 of the second split mold 2 to be mold clamped. The mold clamping, as illustrated in FIGS. 11 and 12, brings the inner circumferential surfaces 11a, 21a of the support portions 11, 21 into close contact with the outer circumferential surface 310a of the axial core member 310 at an appropriate surface pressure, such that the axial core member 310 is supported and fixed between the first split mold 1 and the second split mold 2 and the cylindrical cavity A is defined between the outer circumferential surface 310a of the axial core member 310 and the roller body molding surfaces 12, 22, and a tear-off portion molding space B is defined between one axial end 312 of the axial core member 310 and the tear-off portion molding surfaces 13, 23.

At this time, a portion of the axial core member 310, which is fixed between the support portion 11 of the first split mold 1 and the support portion 21 of the second split mold 2, is subject to compressive force due to mold clamping. However, since recesses 14, 24 are formed at both end portions of the support portions 11, 21, the recesses extending along the parting surfaces 1a, 2a, and being not in contact with the outer circumferential surface 310a of the axial core member 310 at the time of mold clamping, the outer circumferential surface 310a of the axial core member 310 is prevented from being bitten between the end portions of the support portions 11, 21 (between the parting surfaces 1a, 2a). The first split mold 1 and the second split mold 2 are therefore not obstructed from being closed, and the parting surfaces 1a, 2a are brought into close contact with each other.

In addition, the support portions 11, 21 of the first split mold 1 and the second split mold 2 are formed such that the vicinity of the inner diameter portion thereof has a shape in which in width w1 in the axial direction decreases toward the inner diameter side, and therefore the support portions 11, 21 is easily compressed and deformed by the mold clamping force, to thereby be brought into a preferable state of favorable close contact with the outer circumferential surface 310a of the axial core member 310.

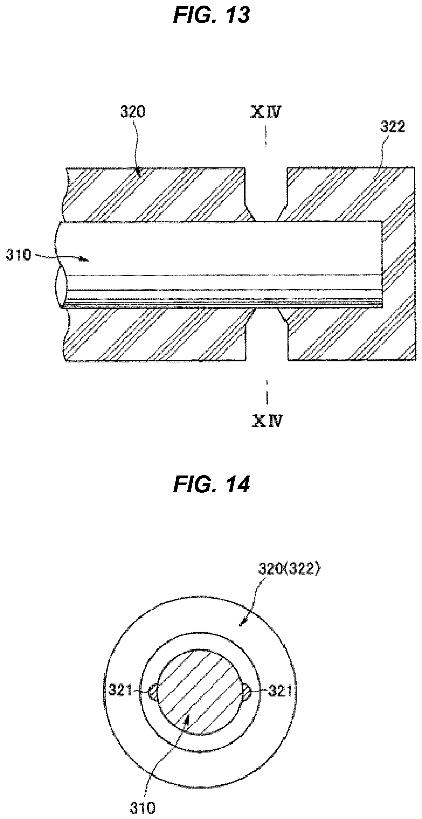

Next, for example, an uncrosslinked liquid rubber composition is injected into the die through an injection port (not illustrated) opened in the tear-off portion molding space B. The liquid rubber composition passes from the tear-off portion molding space B through the semicircular shaped gates C defined between the recesses 14, 24 formed at both end portions of the support portions 11, 21 and the outer circumferential surface 310a of the axial core member 310, and fills inside the cavity A to be shaped. Then, the liquid rubber composition in the cavity A is crosslinked and cured, so that the roller body 320 integrated with the axial core member 310 is molded as illustrated in FIGS. 13 and 14. The liquid rubber composition in the gates C is crosslinked and cured, so that gate burrs 321 continuous with the roller body 320 is molded as illustrated in FIG. 14. The liquid rubber composition in the tear-off portion molding space B is also crosslinked and cured, so that a tear-off portion 322 continuous with the gate burrs 321 is molded as illustrated in FIGS. 13 and 14.

At this time, as illustrated in FIGS. 11 and 12 described above, since the outer circumferential surface 310a of the axial core member 310 and the inner circumferential surfaces 11a, 21a of the support portions 11, 21 are in close contact with each other at an appropriate surface pressure by mold clamping, the liquid rubber composition is prevented from permeating therebetween and from forming a thin burr. Since the parting surfaces 1a, 2a are also in close contact with each other, the liquid rubber composition is prevented from permeating therebetween and from forming a thin burr.

Then, after opening the die by separating the first split mold 1 and the second split mold 2 from each other and taking out the molded article illustrated in FIGS. 13 and 14, the tear-off portion 322 is torn off by hand or the like, as illustrated in FIG. 15. The gate burrs 321 which is continuous with the tear-off portion 322 are also torn off with the tear-off portion 322, enabling deburring to be performed easily.

### Description of Reference Numerals

1 First split mold
2 Second split mold
1a, 2a Parting surface
11, 21 Support portion
12, 22 Roller body molding surface
13, 23 Tear-off portion molding surface
14, 24 Recess
300 Roller
310 Axial core member
311 Annular projection
320 Roller body
321 Gate burr
322 Tear-off portion
A Cavity
B Tear-off portion molding space
C Gate

## Claims

1. A die for molding a roller comprising:
a first split mold and a second split mold which are capable of contacting and separating on parting surfaces opposed to each other;
support portions capable of supporting an axial core member of the roller and closely contacting an outer circumferential surface of the axial core member at an appropriate surface pressure at the time of mold clamping;
roller body molding surfaces that define a cavity between the axial core member and the roller body molding surfaces at the time of mold clamping;
recesses located at both end portions of each of the support portions and extending along the parting surfaces, not in contact with the outer circumferential surface of the axis core member at the time of mold clamping, and penetrating the supporting portions; and
the support portions, the roller body molding surfaces and the recess being formed in the first split mold and the second split mold.

2. The die for molding the roller according to claim 1, wherein the first split mold and the second split mold are formed with tear-off portion molding surfaces located on the opposite side to the roller body molding surfaces interposing the support portions and that define a tear-off portion molding space between the axial core member and the tear-off portion molding surfaces at the time of mold clamping.

3. The die for molding the roller according to claim 1 or 2, wherein
the axial core member is formed with a ring-shaped annular projection, and
an outer circumferential surface of the annular projection is in close contact with the support portions in a state appropriately compressed in a radial direction.

4. The die for molding the roller according to claim 1 or 2, wherein each of the support portions is formed with an arc shape projection.
